(19) Europäisches Patentamt
European Patent Office
Office européen des brevets

(11) **EP 1 756 983 B1**

(12) **EUROPÄISCHE PATENTSCHRIFT**

(45) Veröffentlichungstag und Bekanntmachung des Hinweises auf die Patenterteilung:
**06.07.2011 Patentblatt 2011/27**

(21) Anmeldenummer: **05733735.4**

(22) Anmeldetag: **26.04.2005**

(51) Int Cl.:
**H04B 11/00** *(2006.01)*  **G01S 7/539** *(2006.01)*
**G01S 15/89** *(2006.01)*

(86) Internationale Anmeldenummer:
**PCT/EP2005/004440**

(87) Internationale Veröffentlichungsnummer:
**WO 2005/125064 (29.12.2005 Gazette 2005/52)**

(54) **VERFAHREN ZUM DETEKTIEREN VON ZIELEN**

METHOD FOR DETECTING TARGETS

PROCEDE POUR DETECTER DES CIBLES

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **17.06.2004 DE 102004029368**

(43) Veröffentlichungstag der Anmeldung:
**28.02.2007 Patentblatt 2007/09**

(73) Patentinhaber: **ATLAS ELEKTRONIK GMBH**
**28309 Bremen (DE)**

(72) Erfinder:
• **NEUMEISTER, Dirk**
**28309 Bremen (DE)**

• **HURKA, Jörg**
**26161 Oldenburg (DE)**

(74) Vertreter: **Wasiljeff, Johannes M.B. et al**
**Jabbusch Siekmann & Wasiljeff**
**Patentanwälte**
**Otto-Lilienthal-Strasse 25**
**28199 Bremen (DE)**

(56) Entgegenhaltungen:
JP-A- 2003 232 820 US-A- 5 181 254
US-A- 5 377 163 US-A- 5 668 778
US-B1- 6 397 679

**Beschreibung**

Die Erfindung betrifft ein Verfahren zum Detektieren von Zielen der im Oberbegriff des Anspruchs 1 definierten Gattung.

Bei einem bekannten Verfahren zur Detektion von akustischen Signalen, die von einer Unterwasser-Schallquelle ausgesendet oder reflektiert werden und von Umgebungsrauschen maskiert sind (US 5 668 778) wird das Empfangssignal in z.B. 30.000 Samples oder Punkten abgetastet und die Amplitudenwerte den Ordnungszahlen der Samples zugeordnet. Die Amplitude des Empfangssignals wird in z.B. 64 gleich große Intervalle quantisiert. In Fenstern innerhalb des Empfangssignals mit einer Fenstergröße von z.B. 1.000 Samples und einer Überlappung von z.B. 75%, wird jeweils die Entropie H(X) gemäß

$$H(X) = -\sum_{i=1}^{64} p_i(x) \log_2 p_i(x)$$

berechnet, wobei $p_i(x)$ die Wahrscheinlichkeit ist, dass die Samples ein i-tes-Amplituden-Intervall enthalten. Zur Bestimmung von $p_i(x)$ wird die Anzahl der Samples in dem i-ten-Amplituden-Intervall durch die Gesamtzahl der Samples im Fenster (im Beispiel 1.000) dividiert. Der in einem Fenster mit einer vorgegebenen Anzahl von digitalen Samples (im Beispiel 1.000) berechnete Entropiewert wird mit einer Schwelle verglichen. Liegt der Entropiewert unter dieser Schwelle, so wird auf das Vorhandensein von Signalen geschlossen. Liegt der oberhalb dieser Schwelle, so wird von ausschließlichem Umgebungsrauschen ausgegangen.

Diese Detektionsmethode ist recht gut geeignet, wenn die von der Unterwasser-Schallquelle abgestrahlten Signale eine geringe Bandbreite besitzen oder wenig verrauscht sind, die Empfangssignale also ein ausreichend gutes S/N-Verhältnis besitzen. Bei sehr breitbandigen Signalen, wie sie beispielsweise in der Unterwasserkommunikation verwendet werden, die zudem noch stark verrauscht sind und somit ein extrem schlechtes S/N-Verhältnis, z.B. kleiner -9dB, besitzen, führt dieses Verfahren zu unbefriedigenden Detektionsergebnissen und hoher Falschalarmrate.

Bei einem bekannten Verfahren zur Detektion von Zielen in digitalisierten 2D-Sonarbildern, in denen jedem Pixel eine Graustufe zugeordnet ist (US 5 181 254 A), wird nach Gebieten oder Fenstern mit hoher, niedriger und durchschnittlicher Pixelintensität (Highlight, Shadow, Background) gesucht. In den selektierten Gebieten werden Matched-Filter-Korrelationen durchgeführt, um Highlight und Shadow zu identifizieren. Die identifizierten Highlights und Shadows werden als Ziele, Anomalien oder Background klassifiziert.

Bei einem bekannten Verfahren zur Schätzung eines Frequenzspektrums aus einem akustischen Signal (JP 2003-232820 A) wird eine Variante der bekannten Maximum-Entropie-Methode (MEM) eingesetzt, mit dem Vorteil, dass die Frequenzauflösung des Spektrums sehr viel höher ist als bei einer Frequenzanalyse mittels einer Fast-FourierTransformation (FFT).

Der Erfindung liegt die Aufgabe zugrunde, ein Verfahren anzugeben, mit dem schallabstrahlende Ziele in einer stark verrauschten Umgebung zuverlässig detektierbar sind, und zwar unabhängig von der Art der von den Zielen abgestrahlten Signale. Insbesondere sollen auch Ziele, die nur breitbandige und/oder stark verrauschte Signale abstrahlen, wie z.B. Maschinengeräusche, Kommunikationssignale u. ä., auch in einer stark verrauschten Umgebung mit geringer Falschalarmrate erkannt werden können.

Die Aufgabe wird erfindungsgemäß durch die Merkmale im Anspruch 1 gelöst.

Das erfindungsgemäße Verfahren hat den Vorteil, dass dadurch, dass die Entropiebestimmung nicht im Empfangssignal selbst, sondern in der linear Transformierten des Empfangssignals durchgeführt wird, insbesondere auch solche Ziel mit geringer Falschalarmrate detektiert werden, die breitbandige und/oder große Rauschanteile enthaltene Signale, die zudem noch energiearm sind, in eine stark verrauschte Umgebung abstrahlen.

Das erfindungsgemäße Verfahren wird bevorzugt in der Wasserschalltechnik oder Unterwasserakustik eingesetzt, kann aber auch zur Detektion von Zielen im Medium Luft, die akustische oder elektromagnetische Wellen abstrahlen, verwendet werden.

Zweckmäßige Ausführungsformen des erfindungsgemäßen Verfahrens mit vorteilhaften Weiterbildungen und Ausgestaltungen der Erfindung ergeben sich aus den weiteren Ansprüchen.

Gemäß einer vorteilhaften Ausführungsform der Erfindung wird die lineare Transformation in mit vorzugsweise regelmäßigen Zeitabständen aufeinanderfolgenden, vorzugsweise gleichen Zeitabschnitten eines Empfangssignals vorgenommen. Hierbei kann ein durch die Empfangscharakteristik des Empfängers festgelegter Raumbereich auf das Eindringen von Zielen überwacht werden, was beispielsweise bei Überwachungen von Hafeneinfahrten und/oder Wasserwegen eingesetzt werden kann.

Gemäß einer vorteilhaften Ausführungsform der Erfindung wird die lineare Transformation in zeitgleichen Zeitabschnitten von mindestens zwei aus richtungsselektiven Empfangssektoren des Empfängers empfangenen Empfangssignalen vorgenommen. Durch die Richtungsselektion des Empfängers und der gleichzeitigen Analyse gleicher Signalabschnitte in mehreren Empfangssektoren, die vorzugsweise einander benachbart gewählt werden, können Ziele nicht nur detektiert, sondern auch gepeilt werden.

Gemäß einer bevorzugten Ausführungsform der Erfindung wird zur linearen Transformation eine Fourieranalyse der Zeitabschnitte der Empfangssignale durchgeführt. Die erhaltenen Leistungsspektren werden normiert, wobei vorzugsweise die Euklidische Vektornorm herangezogen wird, und die Entropie der normierten Leistungsspektren wird berechnet. Die berechnete Entropie wird mit einem Schwellwert verglichen und bei signifikantem Unterschreiten des Schwellwerts auf das Vorhandensein mindestens eines Zieles geschlossen.

Gemäß einer bevorzugten Ausführungsform der Erfindung wird dabei die Amplitude der normierten Leistungsspektren in gleich große Amplitudenintervalle quantisiert und die Frequenz der normierten Leistungsspektren in vorzugsweise gleiche Frequenzintervalle unterteilt, wobei bevorzugt als Frequenzintervalle die bei der Fourieranalyse anfallenden Frequenzintervalle verwendet werden. Die Entropie wird aus der Verteilungsfunktion der normierten Häufigkeit der Frequenzintervalle in den Amplitudenintervalle berechnet. Alternativ kann die Entropie auch aus der Verteilungsfunktion der normierten Häufigkeit der in den Frequenzintervallen auftretenden Amplitudenintervalle berechnet werden. In beiden Fällen wird die Normierung der Häufigkeit mit der Gesamtzahl der vorhandenen Frequenzintervalle durchgeführt.

Gemäß einer vorteilhaften Ausführungsform der Erfindung wird zur linearen Transformation eine Wavelet-Zerlegung der Zeitabschnitte der Empfangssignale durchgeführt und die Entropie aus den Wavelet-Koeffizienten gemäß

$$S = K\sum_{i=1}^{l} \sum_{k=1}^{N_i} p_{i,k} \log_a p_{i,k} \qquad \text{mit a=2 oder a=e}$$

berechnet, wobei K den Wert -1 oder +1 annehmen kann und $p_{i,k}$ die Wahrscheinlichkeit der Detailkoeffizienten $d_{i,k}$, l die Anzahl der Skalen und $N_i$ die Anzahl der Detailkoeffizienten $d_{i,k}$ auf der i-ten Skala ist. Die Wahrscheinlichkeit $p_{i,k}$ wird gemäß

$$p_{i,k} = 1 + \frac{1}{\sqrt{2\pi}\sigma_i} e^{-\frac{d^2_{i,k}}{2\sigma_i^2}}$$

berechnet, wobei $\sigma_i$ die Rausch-Standardabweichung auf jeder der i Skalen ist.

Die von den Zielen abgestrahlten Signale lassen sich je nach Art und Form der Signale unterschiedlich gut durch Entropieberechnung aus den Frequenzspektren oder durch Entropieberechnung aus den Wavelet-Koeffizienten detektieren. Da die von den Zielen abgestrahlten Signale jedoch unbekannt sind, ist es von Vorteil, beide hier vorgestellte Verfahren bei der Zieldetektion parallel anzuwenden, so dass die Empfangssignale des Empfängers einmal einer Fourieranalyse und einmal einer Wavelet-Analyse unterzogen werden und jeweils die Entropie berechnet wird. Durch Vergleich der so auf zwei verschiedenen Wegen ermittelten Detektionsergebnisse lässt sich eine Zielaussage noch zuverlässiger treffen.

Die Erfindung ist anhand von in der Zeichnung dargestellten Ausführungsbeispielen im folgenden näher beschrieben. Es zeigen:

Fig. 1   ein Blockschaltbild mit Funktionseinheiten zum Illustrieren des Verfahrens zur Detektion von Zielen,

Fig. 2   einen Zeitabschnitt eines beispielhaften Empfangssignals am Ausgang eines Beamformers in Fig. 1,

Fig. 3   das Leistungsspektrum von zwei Zeitabschnitten des Empfangssignals in Fig. 2,

Fig.4   eine Darstellung der aus den Leistungsspektren berechnete Entropie als Funktion der Zeit,

Fig. 5   ein Blockschaltbild mit Funktionseinheiten zum Illustrieren eines modifizierten Verfahrens zur Detektion von Zielen,

Fig. 6     einen Zeitabschnitt eines beispielhaften Empfangssignals am Ausgang eines Beamformers in Fig. 5,

Fig. 7     eine Wavelet-Zerlegung des Zeitabschnitts des Empfangssignals in Fig. 6 in drei Leveln oder Skalen,

Fig. 8     eine Darstellung des zeitlichen Verlaufs der aus den Wavelet-Koeffizienten gemäß Fig. 7 berechneten Entropie.

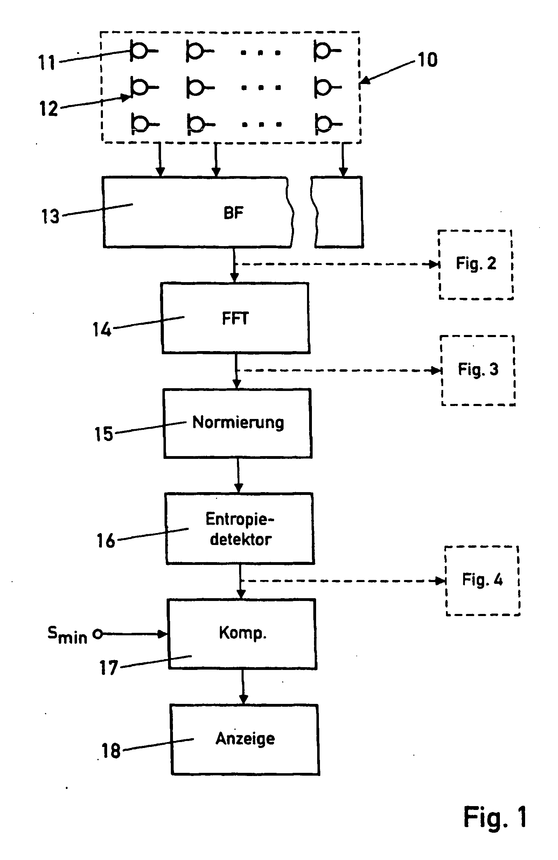

Das nachstehend beschriebene Verfahren zum Detektieren von Zielen setzt voraus, dass die in einem Medium sich befindlichen Ziele Wellenenergie abstrahlen, d.h. Wellenenergie selbst aussenden oder auf sie auftreffende Wellenenergie reflektieren. In dem nachstehend beschriebenen Ausführungsbeispiel des Verfahrens wird dabei das Medium Wasser zugrundegelegt, in dem sich ein akustisches Wellenfeld ausbreitet, das mit einem aus einer Vielzahl von elektroakustischen Wandlern 11 bestehenden, zielfernen Empfänger 10, auch Wandlerarray oder Sonarbasis genannt, empfangen wird. Die elektroakustischen Wandler 11 sind beispielsweise, wie dies in Fig. 1 schematisch dargestellt ist, zu vertikal ausgerichteten Staves 12 zusammengefasst, die auf einer ebenen Fläche oder auf der Mantelfläche eines Zylinders vorzugsweise äquidistant angeordnet sind. Im Ausführungsbeispiel der Fig. 1 sind pro Stave 12 drei akustische Wandler 11 dargestellt, jedoch ist die Zahl der elektroakustischen Wandler beliebig wählbar. Verzichtet man auf eine vertikale Bündelung der Empfangscharakteristik des Empfängers 10, d.h. auf einen kleinen vertikalen Öffnungswinkel des Empfängers 10, so reicht ein einziger elektroakustischer Wandler 11 pro Stave 12 aus. Die Zahl der horizontal nebeneinander angeordneten Staves 12 kann beliebig gewählt werden und beträgt z.B. bei einer Zylinderbasis sechsundneunzig. Jeweils eine Gruppe von Staves 12 wird gemeinsam betrieben. Durch eine entsprechende Signalverarbeitung der Empfangssignale der Wandler 11 einer Gruppe von gemeinsam betriebenen Staves 12 hat die Wandlergruppe eine Richtcharakteristik mit einer Hauptrichtung größter Empfangsempfindlichkeit, dem sog. Beam. Diese Richtcharakteristik der Wandlergruppe, auch Gruppencharakteristik genannt, wird zur horizontalen Abtastung des Mediums in der Umgebung des Empfängers 10 elektronisch geschwenkt, wobei durch Hinzufügen und Wegnahme jeweils eines oder mehrerer Staves 12 in der Wandlergruppe die Hauptrichtung der Richtcharakteristik schrittweise horizontal geschwenkt wird, bei einer Zylinderbasis beispielsweise über 360°. Durch dieses elektronische Schwenken entsteht eine Vielzahl von nebeneinanderliegenden Richtcharakteristiken der einzelnen Wandlergruppen mit Hauptrichtungen großer Empfangsempfindlichkeit, was als Beamfächer bezeichnet wird. Die Bildung der Richtcharakteristiken der Wandlergruppe erfolgt in einem Richtungsbildner, einem sog. Beamformer 13, an dessen Ausgang für jeden Beam bzw. für jede Wandlergruppe ein elektrisches Gruppensignal abgenommen werden kann. Aufbau und Funktionsweise des Beamformers 13 sind beispielsweise in der US 4 060 792 beschrieben.

Das Verfahren zur Zieldetektion wird anhand der Auswertung eines der Gruppensignale des Beamformers 13, im folgenden Empfangssignal genannt, beschrieben. In gleicher Weise werden die übrigen Gruppensignale ausgewertet, so dass in jedem Beam, der einem Empfangssektor mit einer definierten Empfangsrichtung des Empfängers 10 entspricht, eine Zieldetektion durchgeführt wird. Die Auswertung der Empfangssignale am Ausgang des Beamformers 13 zur Detektion von Zielen erfolgt grundsätzlich in der Weise, dass vorzugsweise gleich große Signalabschnitte der Empfangssignale einer linearen Transformation unterzogen werden, die Entropie der Transformierten bestimmt und aus Veränderungen der Entropie in den Transformierten auf Ziele geschlossen wird. Will man die Zieldetektion nur in einem einzigen Beam durchführen, so folgen die gleich großen Signalabschnitte, in denen eine linear Transformation vorgenommen wird, zeitlich aufeinander. Will man hingegen Ziele in allen Beams oder Empfangssektoren detektieren und tracken, so sind die gleich großen Signalabschnitte, die einer linearen Transformation unterzogen werden, zeitgleiche Signalabschnitte in den einzelnen Gruppensignalen am Ausgang des Beamformers 13.

In dem in Fig. 1 illustrierten Verfahren wird zur linearen Transformation der Zeitabschnitte der Empfangssignale jeder Zeitabschnitt in einem als Fast-Fourier-Transformator (FFT) ausgebildeten Funktionsblock 14 einer Fourieranalyse unterzogen, die das Leistungsspektrum des Empfangssignals in den einzelnen Zeitabschnitten bildet.

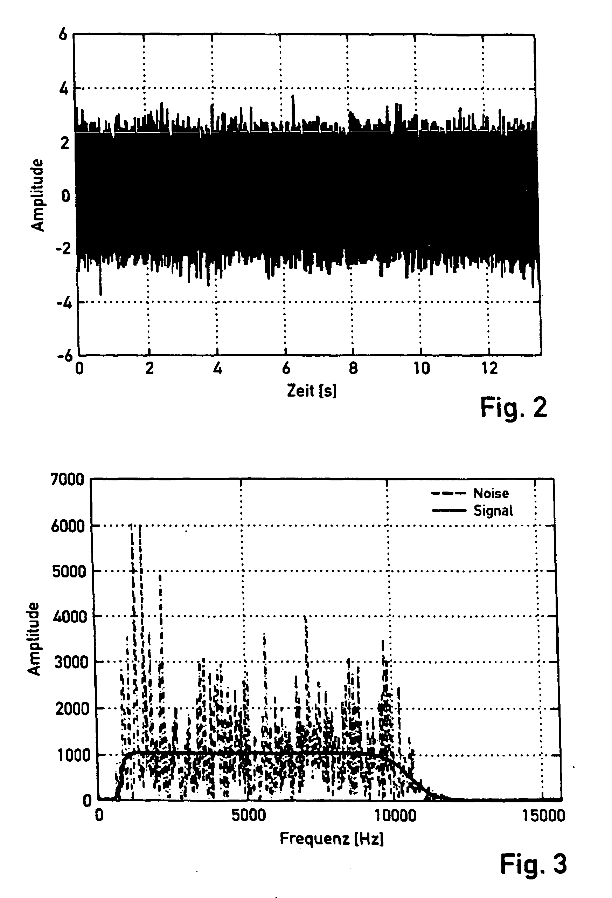

In Fig. 2 ist ein Beispiel für ein Empfangssignal dargestellt, das in einem Zeitabschnitt 0 - ca. 13s am Ausgang des Beamformers 13 abgenommen wird. Wie in der Amplitudendarstellung des Empfangssignals über der Zeit nicht zu erkennen ist, ist dieses beispielhafte Signal ein künstlich generiertes Signal, das in den Zeitabschnitten 0 - 5s und 10 - 15s jeweils einen Rauschanteil und in dem Zeitabschnitt 5 - 10s einen breitbandigen Signalanteil enthält. Das das Signal im Empfangssignal noch üblicherweise überlagernde Umgebungsrauschen ist im Beispiel unterdrückt.

In Fig. 3 sind die durch die Fourieranalyse aus den Zeitabschnitte 1 - 5s und 5 - 10s gewonnenen Leistungsspektren dargestellt. Dabei ist das Leistungsspektrum aus dem Zeitabschnitt 1 - 5s strichliniert und aus dem Zeitabschnitt 5 - 10s durchgezogen dargestellt. Im Leistungsspektrum ist aufgrund der vereinfachten Darstellung die Signalstruktur zu erkennen, und zwar der Rauschanteil im Zeitabschnitt 1 - 5s (strichliniert) und der breitbandige Signalanteil im Zeitabschnitt 5 - 10s (ausgezogen). Im Funktionsblock 15 werden die Leistungsspektren normiert, wobei bevorzugt die Euklidische Vektornorm herangezogen wird. Hierzu werden alle Amplitudenwerte der Fourier- oder Spektralkomponenten durch einen Normierungsfaktor dividiert, der sich aus der Wurzel der Summe der Amplitudenwertquadrate aller in einem Zeitabschnitt vorhandenen Fourierkomponenten ergibt. In den solchermaßen normierten Leistungsspektren wird in dem als Entropiedetektor ausgebildeten Funktionsblock 16 die Entropie berechnet. Hierzu wird die Amplitude der normierten Leistungsspektren in gleich große Amplitudenintervalle quantisiert und die Frequenz der normierten Leistungsspektren in vorzugsweise gleiche Frequenzintervalle unterteilt. Bevorzugt werden als Frequenzintervalle die bei der Fourieranalyse erhaltenen Frequenzintervalle verwendet. Zur Entropieberechnung wird die Häufigkeit der in jedem Amplitudenintervall auftretenden Frequenzintervalle bestimmt, normiert und der Quantenzahl der Amplitudenintervalle zugeordnet. Aus dieser so gewonnenen Verteilungsfunktion wird dann die Entropie S gemäß

$$S = -\sum p_i \log_a p_i \qquad \text{mit } a=2 \text{ oder } a=e \qquad (1),$$

berechnet, wobei $p_i$ die relative Wahrscheinlichkeit oder normierte Häufigkeit der im i-ten Amplitudenintervall auftretenden Frequenzintervalle ist. Die Normierung der Häufigkeit der Amplitudenintervalle erfolgt in der Weise, dass die Häufigkeit durch die Gesamtzahl der im Leistungsspektrum insgesamt vorhandenen Frequenzintervalle dividiert wird, so dass gilt

$$\sum_i p_i = 1 \qquad (2).$$

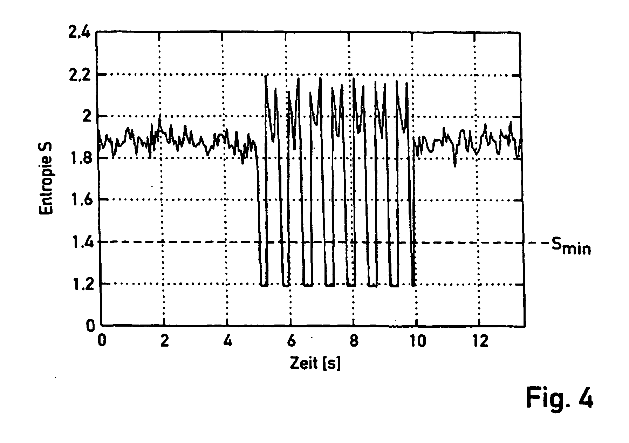

In Fig. 4 ist die im Funktionsblock 16 "Entropiedetektor" berechnete und am Ausgang des Entropiedetektors abnehmbare Entropie S als Funktion der Zeit dargestellt. Deutlich ist zu sehen, dass in dem Zeitbereich 5 - 10s der Entropiewert extrem absinkt. Diese Zeitspanne ist identisch mit dem Zeitbereich 5 - 10s im Empfangssignal, in dem das breitbandige Signal auftritt.

Die so berechnete Entropie wird dem Funktionsblock 17 "Komparator" zugeführt, der den Entropiewert fortlaufend mit einer Schwelle $S_{min}$ vergleicht. Wird die Schwelle $S_{min}$ unterschritten, so gibt der Komparator 17 ein Signal an eine Anzeigeeinheit 18, die eine Zieldetektion anzeigt. Die Größe der Schwelle $S_{min}$ ist bestimmt durch die zugelassene Falschalarmrate.

In einer Modifizierung des beschriebenen Verfahrens wird im Entropiedetektor 16 die Häufigkeit der den einzelnen Frequenzintervallen zugehörigen Amplitudenintervalle bestimmt, normiert und der Ordnungszahl der Frequenzintervalle zugeordnet. Aus der so gewonnenen Verteilungsfunktion wird die Entropie S gemäß

$$S = -\sum_j p_j \cdot \log_a p_j \qquad \text{mit } a=2 \text{ oder } a=e \qquad (3)$$

berechnet, wobei $p_j$ die relative Wahrscheinlichkeit oder normierte Häufigkeit der im j-ten Frequenzintervall auftretenden Amplitudenintervalle ist. Die Normierung der Häufigkeit wird wiederum in der Weise vorgenommen, dass die Häufigkeit der Amplitudenintervalle durch die Gesamtzahl der insgesamt vorhandenen Frequenzintervalle dividiert wird, so dass gilt

$$\sum_j p_j = 1 \qquad (4).$$

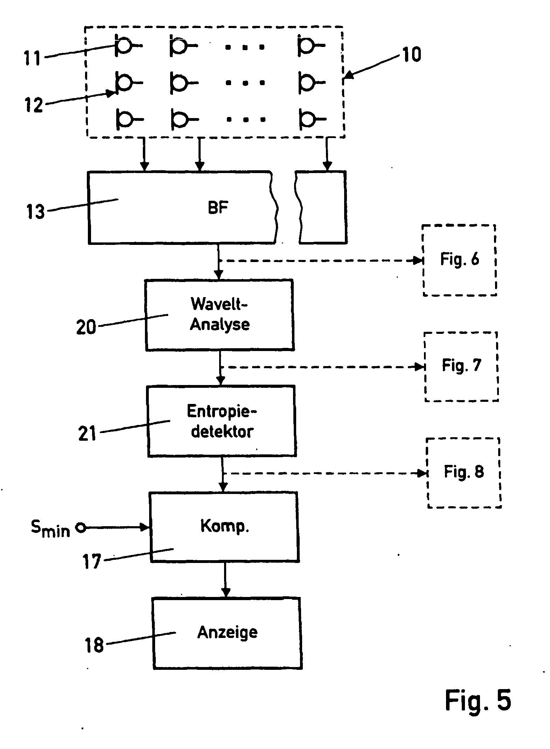

Das mit dem Blockschaltbild gemäß Fig. 5 illustrierte Verfahren zur Zieldetektion unterscheidet sich von dem zu Fig. 1 beschriebenen Verfahren dadurch, dass die lineare Transformation der Zeitabschnitte der Empfangssignale am Ausgang des Beamformers 13 mittels Wavelet-Analyse oder Wavelet-Zerlegung durchgeführt wird und die Entropie S aus den Wavelet-Koeffizienten gemäß

$$S = \sum_{i=1}^{l} \sum_{k=1}^{N_i} p_{i,k} \log_a p_{i,k} \qquad \text{mit } a=2 \text{ oder } a=e \qquad (5)$$

berechnet wird. $p_{i,k}$ ist die Wahrscheinlichkeit der bei der Wavelet-Zerlegung gewonnenen Detailkoeffizienten $d_{i,k}$, 1 die Anzahl der Skalen oder Levels der Wavelet-Zerlegung und $N_i$ die Anzahl der Detailkoeffizienten $d_k$ auf der i-ten Skala. Die Wahrscheinlichkeit $p_{i,k}$ wird dabei gemäß

$$p_{i,k} = 1 + \frac{1}{\sqrt{2\pi}\sigma_i} e^{-\frac{d^2_{i,k}}{2\sigma_i^2}} \qquad (6)$$

berechnet, wobei $\sigma_i$ mit i=1 bis 1 die Rausch-Standardabweichung auf jeder der Skalen ist.

Alternativ kann die Entropie auch gemäß

$$S = \sum_{i=1}^{l} \sum_{k=1}^{N_i} \frac{p_{i,k} \ln p_{i,k}}{N_i} \qquad (7)$$

berechnet werden, wobei wieder 1 die Anzahl der Skalen und $N_i$ die Anzahl der Wavelet-Koeffizienten auf der i-ten Skala bezeichnet. Selbstverständlich kann anstelle von $\ln p_{i,x}$ auch $\log_2 p_{i,k}$ gesetzt werden.

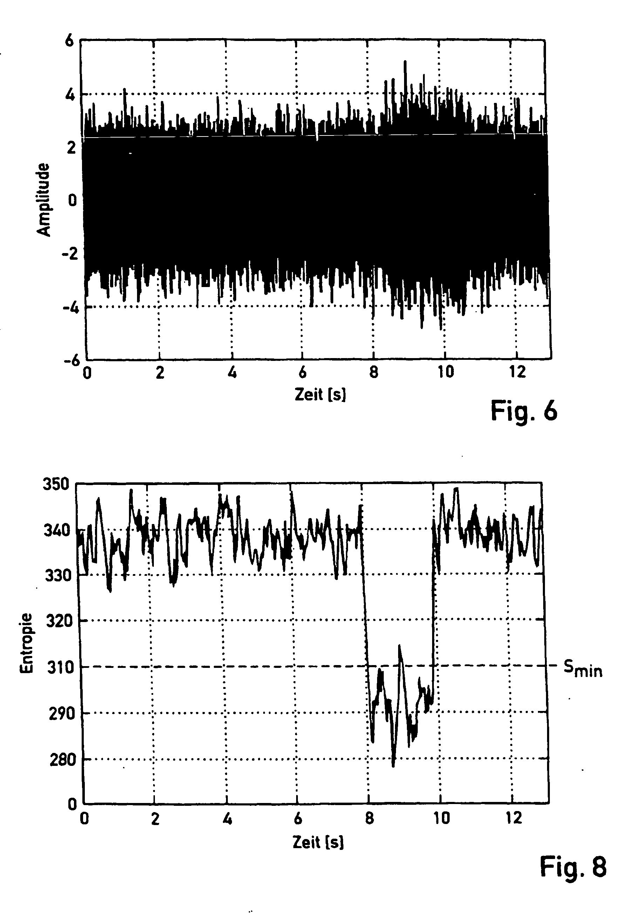

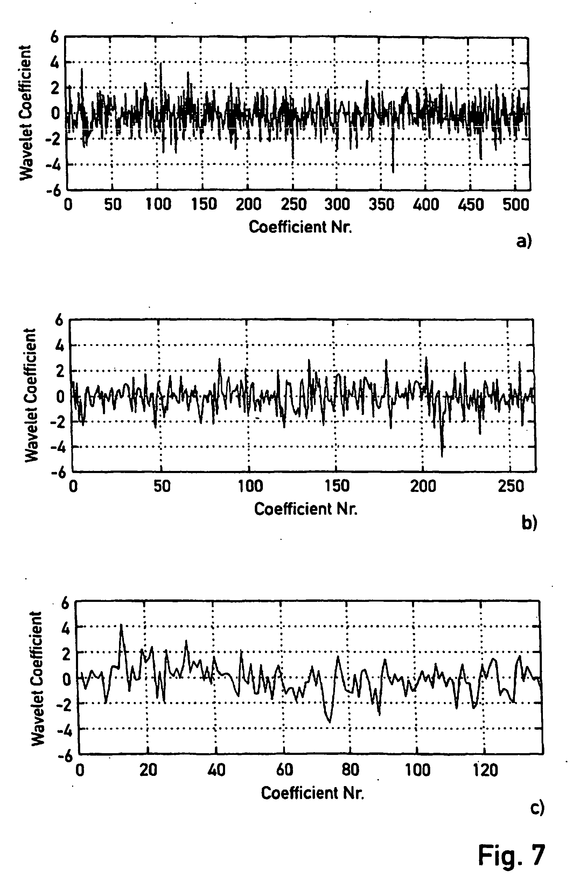

In Fig. 6 ist beispielhaft ein Zeitabschnitt von ca. 13s eines künstlich erzeugten, vom Ziel abgestrahlten Signals dargestellt, das im Empfänger 10 empfangen wird und am Ausgang des Beamformers 13 abnehmbar ist. Das Empfangssignal weist in der Zeit 1 - 8s einen Rauschanteil und in der Zeitspanne 8 - 10s einen breitbandigen Signal- und Rauschanteil und danach wieder einen Rauschanteil auf. Die auf dieses Empfangssignal angewendete Wavelet-Zerlegung ist in drei Levels beispielhaft dargestellt, die zu drei Skalen führt. Bei jeder Wavelet-Zerlegung wird eine Anzahl von Approximationskoeffizienten und eine Anzahl von Detailkoeffizienten erhalten. Die Detailkoeffizienten $d_{i,k}$ werden entsprechend ihrer Position aufeinanderfolgend nummeriert (k=1 bis $N_i$) und einem Skalenwert i (i=1 bis 1) zugeordnet. Aus den Approximationskoeffizienten wird ein modifiziertes Zeitsignal generiert, auf das wiederum eine Wavelet-Zerlegung angewendet wird. Wie in Fig. 7 illustriert ist, wird die erste Wavelet-Zerlegung auf den Zeitabschnitt des Empfangssignals gemäß Fig. 6 angewendet. Die dabei im Level 1 entstehenden Detailkoeffizienten $d_{1,k}$ sind dem Skalenwert i=1 zugeordnet und entsprechend ihrer Position mit den Koeffizientennummern k=1 bis 517 belegt (Fig. 7a). Aus den Approximationskoeffizienten wird ein modifiziertes Zeitsignal generiert, das gegenüber dem in Fig. 6 dargestellten Empfangsignal bereits stärker geglättet ist. Auf dieses modifizierte Zeitsignal wird die nächste Wavelet-Zerlegung angewendet, wobei in bekannter Weise das Wavelet gedehnt wird. Die dabei im Level 2 entstehenden Detailkoeffizienten $d_{2,k}$ sind mit ihren Koeffizientennummern k=1 bis 264 in Zuordnung zu dem Skalenwert i=2 in Fig. 7b dargestellt. Die bei der zweiten Wavelet-Zerlegung entstehenden Approximationskoeffizienten werden wiederum zu einem neuen modifizierten Zeitsignal zusammengesetzt, das gegenüber dem zuvor modifizierten Zeitsignal wiederum stärker geglättet ist. Auf dieses Zeitsignal wird wiederum eine Wavelet-Zerlegung angewendet, wobei das Wavelet noch stärker zeitlich gedehnt wird. Die im Level 3 enthaltene Detailkoeffizienten $d_{3,k}$ sind in Fig. 7c mit ihren Koeffizientennummern k=1 bis 137 dem Skalenwert i=3 zugeordnet.

Die Wavelet-Zerlegung wird abgebrochen, wenn die Zusammensetzung der Approximationskoeffizienten zu einem neuen modifizierten Zeitsignal ein weitgehend geglättete Signal ergibt. Aus den so gewonnenen Detailkoeffizienten $d_{i,k}$ mit i=1 bis i=1 und k=1 bis k=$N_i$ wird die Entropie S gemäß Gl. (5) oder Gl. (7) berechnet.

Die aus den Detailkoeffizienten $d_{i,k}$ gemäß Gl. (5) oder Gl. (7) in Verbindung mit Gl. (6) berechnete Entropie ist im Diagramm der Fig. 8 als Funktion der Zeit dargestellt. Deutlich ist zu sehen, dass im Zeitbereich 8 - 10s die Entropie stark abfällt. Dieser Abfall erfolgt in dem Zeitbereich, in dem im Empfangsignal der breitbandige Signalanteil des vom Ziel gesendeten Signals auftritt. Die im Entropiedetektor 21 berechnete Entropie gemäß Fig. 8 wird dem Komparator 17 zugeführt, an dem wiederum eine Schwelle $S_{min}$ angelegt ist. Unterschreiten die Entropiewerte diese Schwelle, so gibt der Komparator 17 ein Signal an die Anzeigeinheit 18, die eine Zieldetektion anzeigt.

In Gl. (1) und Gl. (3) kann das Minuszeichen durch ein Pluszeichen und in Gl. (5) das Pluszeichen durch ein Minuszeichen ersetzt werden. In diesem Fall legt eine Zieldetektion dann vor, wenn die berechnete Entropie eine vorgegebene Schwelle übersteigt.

## Patentansprüche

1. Verfahren zum Detektieren von Zielen, die Wellenenergie in ein Medium abstrahlen, insbesondere von akustische Energie ins Wasser abstrahlenden Zielen, mittels Entropiebestimmung in Zeitabschnitten von elektrischen Empfangsignalen eines im Medium zielfern angeordneten Empfängers, **dadurch gekennzeichnet, dass** die Zeitabschnitte der Empfangsignale einer linearen Transformation unterzogen werden, die Entropie der Transformierten bestimmt und aus Veränderungen der Entropie in den Transformierten auf Ziele geschlossen wird.

2. Verfahren nach Anspruch 1, **dadurch gekennzeichnet, dass** die Transformation in mit vorzugsweise regelmäßigem Zeitabstand aufeinanderfolgenden, vorzugsweise gleichen Zeitabschnitten eines Empfangssignals vorgenommen wird.

3. Verfahren nach Anspruch 1, **dadurch gekennzeichnet, dass** die Transformation in zeitgleichen Abschnitten von mindestens zwei aus richtungsselektiven Empfangssektoren des Empfängers empfangenen Empfangssignalen vorgenommen wird.

4. Verfahren nach Anspruch 3, **dadurch gekennzeichnet, dass** die Empfangssignale räumlich benachbarten Empfangssektoren entnommen werden.

5. Verfahren nach einem der Ansprüche 1 - 4, **dadurch gekennzeichnet, dass** zur linearen Transformation eine Fourieranalyse der Zeitabschnitte der Empfangssignale durchgeführt wird, deren normierte Leistungsspektren gebildet werden und die Entropie der normierten Leistungsspektren berechnet wird.

6. Verfahren nach Anspruch 5, **dadurch gekennzeichnet, dass** zur Normierung der Leistungsspektren die Euklidische Vektornorm herangezogen wird.

7. Verfahren nach Anspruch 5 oder 6, **dadurch gekennzeichnet, dass** die Amplitude der normierten Leistungsspektren in gleich große Amplitudenintervalle quantisiert und die Frequenz der normierten Leistungsspektren in vorzugsweise gleiche Frequenzintervalle unterteilt wird, dass die Häufigkeit der in den Amplitudenintervallen auftretenden Frequenzintervalle bestimmt und normiert wird, dass die normierte Häufigkeit jeweils den Quantenzahlen der Amplitudenintervalle zugeordnet wird und dass in der so gewonnenen Verteilungsfunktion die Entropie S gemäß

$$S = K \sum p_i \log_a p_i \qquad \text{mit } a=2 \text{ oder } a=e \qquad (1)$$

berechnet wird, wobei K den Wert -1 oder +1 annehmen kann und $p_i$ die normierte Häufigkeit der im i-ten Amplitudenintervall auftretenden Frequenzintervalle ist, und dass die Normierung der Häufigkeit mit der Gesamtzahl der im jeweiligen Leistungsspektrum insgesamt vorhandenen Frequenzintervalle vorgenommen wird, so dass gilt

$$\sum_i p_i = 1 \qquad (2).$$

8. Verfahren nach Anspruch 5 oder 6, **dadurch gekennzeichnet, dass** die Amplitude der normierten Leistungsspektren in gleiche Amplitudenintervalle quantisiert und die Frequenz der Leistungsspektren in gleich große Frequenzintervalle unterteilt wird, dass die Häufigkeit der den einzelnen Frequenzintervallen zugehörigen Amplitudenintervalle bestimmt, normiert und jeweils den Ordnungszahlen der Frequenzintervalle zugeordnet wird und dass aus der so gewonnenen Verteilungsfunktion die Entropie S gemäß

$$S = K \sum_j p_j \cdot \log_a p_j \qquad \text{mit a=2 oder a=e} \qquad (3)$$

berechnet wird, wobei K den Wert -1 oder +1 annehmen kann und $p_j$ die normierte Häufigkeit der im j-ten Frequenzintervall auftretenden Amplitudenintervalle ist, und dass die Normierung der Häufigkeit mit der Gesamtzahl der im jeweiligen Leistungsspektrum insgesamt vorhandenen Frequenzintervalle vorgenommen wird, so dass gilt

$$\sum_j p_j = 1 \qquad\qquad (4).$$

9. Verfahren nach Anspruch 7 oder 8, **dadurch gekennzeichnet, dass** als Frequenzintervalle die aus der Fourieranalyse hervorgehenden Frequenzintervalle verwendet werden.

10. Verfahren nach einem der Ansprüche 1 - 4, **dadurch gekennzeichnet, dass** zur linearen Transformation eine Wavelet-Zerlegung der Zeitabschnitte der Empfangsignale durchgeführt und aus den Wavelet-Koeffizienten die Entropie S gemäß

$$S = K \sum_{i=1}^{l} \sum_{k=1}^{N_i} p_{i,k} \log_a p_{i,k} \qquad \text{mit a=2 oder a=e} \qquad (5)$$

berechnet wird, wobei K den Wert -1 oder +1 annehmen kann und $p_{i,k}$ die Wahrscheinlichkeit der Detailkoeffizienten $d_{i,k}$, 1 die Anzahl der Skalen und Ni die Anzahl der Detailkoeffizienten auf der i-ten Skala ist, und dass die Wahrscheinlichkeit $p_{i,k}$ gemäß

$$p_{i,k} = 1 + \frac{1}{\sqrt{2\pi}\sigma_i} e^{-\frac{d^2_{i,k}}{2\sigma_i^2}} \qquad\qquad (6)$$

berechnet wird, wobei $\sigma_i$ die Rausch-Standardabweichung auf der i-ten Skala ist.

11. Verfahren nach Anspruch 10, **dadurch gekennzeichnet, dass** die Wavelet-Zerlegung in mehreren Leveln oder Transformationsstufen durchgeführt wird, wobei bei jeder Wavelet-Zerlegung Approximationskoeffizienten und Detailkoeffizienten erhalten werden, dass die Wavelet-Zerlegung in dem ersten Level auf das durch die einzelnen Zeitabschnitte definierte Zeitsignal und in jedem folgenden Level auf ein aus den Approximationskoeffizienten generiertes, modifiziertes Zeitsignal angewendet wird und dass jeweils die bei einem Level einer Wavelet-Zerlegung erhaltenen Detailkoeffizienten $d_{i,k}$ entsprechend ihrer Koeffizientennummer k auf einer von aufeinanderfolgenden i Skalen aufgetragen werden, die dem jeweiligen Level der Wavelet-Zerlegung entspricht.

12. Verfahren nach einem der Ansprüche 1 - 11, **dadurch gekennzeichnet, dass** die berechnete Entropie S mit einen Schwellwert verglichen und je nach vorgegebenem Wert K als -1 oder +1 bei Unter- oder Überschreiten des Schwellwerts auf das Vorhandensein mindestens eines Ziels geschlossen wird.

**Claims**

1. Method for detection of targets which emit wave energy into a medium, in particular of targets which emit acoustic energy into water, by means of entropy determination in time periods of electrical received signals in a receiver which is arranged remotely from the target in the medium, **characterized in that** the time periods of the received signals are subjected to a linear transformation process, the entropy of the transforms is determined, and targets are deduced from changes in the entropy in the transforms.

2.  Method according to Claim 1, **characterized in that** the transformation is carried out in preferably identical time periods in a received signal, which preferably follow one another at a regular time interval.

3.  Method according to Claim 1, **characterized in that** the transformation is carried out in periods of equal time from at least two received signals, which have been received from directionally selective reception sectors of the receiver.

4.  Method according to Claim 3, **characterized in that** the received signals are taken from spatially adjacent reception sectors.

5.  Method according to one of Claims 1-4, **characterized in that** a Fourier analysis of the time periods of the received signals is carried out for linear transformation, their normalized power spectra are formed, and the entropy of the normalized power spectra is calculated.

6.  Method according to Claim 5, **characterized in that** the Euclidean vector norm is used for normalization of the power spectra.

7.  Method according to Claim 5 or 6, **characterized in that** the amplitude of the normalized power spectra is quantized into amplitude intervals of the same magnitude, and the frequency of the normalized power spectra is subdivided into preferably identical frequency intervals, **in that** the probability of the frequency intervals which occur in the amplitude intervals is determined and is normalized, **in that** the normalized probability is in each case associated with the quanta numbers of the amplitude intervals, and **in that** the entropy S in the distribution function obtained in this way is calculated using

$$S = K \sum p_i \log_a p_i \quad \text{where } a=2 \text{ or } a=e \qquad (1),$$

where K can assume the value -1 or +1, and $p_i$ is the normalized probability of the frequency intervals which occur in the i-th amplitude interval, and **in that** the probability is normalized using the total number of the frequency intervals which occur in total in the respective power spectrum, such that:

$$\sum_i p_i = 1 \qquad (2).$$

8.  Method according to Claim 5 or 6, **characterized in that** the amplitude of the normalized power spectra is quantized into identical amplitude intervals, and the frequency of the power spectra is subdivided into frequency intervals of equal magnitude, **in that** the probability of the amplitude intervals which are associated with the individual frequency intervals is determined, normalized and is in each case associated with the order numbers of the frequency intervals, and **in that** the entropy S is calculated from the distribution function obtained in this way using:

$$S = K \sum_j p_j \cdot \log_a p_j \quad \text{where } a=2 \text{ or } a=e \qquad (3),$$

where K can assume the value -1 or +1 and $p_j$ is the normalized probability of the amplitude intervals which occur in the j-th frequency interval, and **in that** the probability is normalized using the total number of the frequency intervals which occur in total in the respective power spectrum, such that:

$$\sum_{j} p_{j} = 1 \qquad\qquad (4).$$

9. Method according to Claim 7 or 8, **characterized in that** the frequency intervals which are obtained from the Fourier analysis are used as frequency intervals.

10. Method according to one of Claims 1-4, **characterized in that** a wavelet breakdown of the time periods of the received signals is carried out for linear transformation, and the entropy S is calculated from the wavelet coefficients using

$$S = K \sum_{i=1}^{1} \sum_{k=1}^{Ni} p_{i,k} \log_a p_{i,k} \text{ where } a=2 \text{ or } a=e \qquad (5),$$

where K can assume the value -1 or +1 and $p_{i,k}$ is the probability of the detail coefficients $d_{i,k}$, 1 is the number of scales and $N_i$ is the number of detail coefficients on the i-th scale, and **in that** the probability $p_{i,k}$ is calculated using

$$p_{i,k} = 1 + \frac{1}{\sqrt{2\pi}\sigma_i} e^{-\frac{d^2 i,k}{2\sigma_i^2}} \qquad (6),$$

where $\sigma_i$ is the noise standard deviation on the i-th scale.

11. Method according to Claim 10, **characterized in that** the wavelet breakdown is carried out in a plurality of levels or transformation steps, with approximation coefficients and detail coefficients being obtained in each wavelet breakdown, **in that** the wavelet breakdown in the first level is applied to the time signal defined by the individual time periods, and in each subsequent level is applied to a modified time signal generated from the approximation coefficients, and **in that** the detail coefficients $d_{i,k}$ which are obtained from one level of a wavelet breakdown are in each case plotted on the basis of their coefficient number k on one of i successive scales, which corresponds to the respective level of the wavelet breakdown.

12. Method according to one of Claims 1-11, **characterized in that** the calculated entropy S is compared with a threshold value, and the presence of at least one target is deduced if the threshold value is undershot or overshot, depending on whether the predetermined value K is -1 or +1.

**Revendications**

1. Procédé pour détecter des cibles qui rayonnent de l'énergie ondulatoire dans un milieu, notamment des cibles qui rayonnent de l'énergie acoustique dans l'eau, par détermination de l'entropie dans des portions de temps de signaux de réception électriques provenant d'un récepteur disposé à distance de la cible dans le milieu, **caractérisé en ce que** les portions de temps des signaux de réception sont soumises à une transformation linéaire, l'entropie des transformées est déterminée et la cible est déduite des modifications de l'entropie dans les transformées.

2. Procédé selon la revendication 1, **caractérisé en ce que** la transformation est effectuée dans des portions de temps d'un signal de réception qui se succèdent de préférence à des intervalles de temps réguliers et de préférences égales.

3. Procédé selon la revendication 1, **caractérisé en ce que** la transformation est effectuée dans des portions synchronisées d'au moins deux signaux de réception reçus depuis des secteurs de réception à sélectivité directionnelle du récepteur.

**4.** Procédé selon la revendication 3, **caractérisé en ce que** les signaux de réception sont prélevés de secteurs de réception voisins dans l'espace.

**5.** Procédé selon l'une des revendications 1 à 4, **caractérisé en ce que** la transformation linéaire est effectuée par une analyse de Fourier des portions de temps des signaux de réception dont les spectres de puissance normalisés sont formés et l'entropie des spectres de puissance normalisés est calculée.

**6.** Procédé selon la revendication 5, **caractérisé en ce que** la norme de vecteur euclidienne est utilisée pour la normalisation des spectres de puissance.

**7.** Procédé selon la revendication 5 ou 6, **caractérisé en ce que** l'amplitude des spectres de puissance normalisés est quantifiée à des intervalles d'amplitude de même taille et la fréquence des spectres de puissance normalisés est divisée en intervalles de fréquence de préférences identiques, **en ce que** la périodicité des intervalles de fréquence qui apparaissent dans les intervalles d'amplitude est déterminée et normalisée, **en ce que** la périodicité normalisée est à chaque fois associée aux nombres quantiques des intervalles d'amplitude et **en ce que** l'entropie S est calculée dans la fonction de répartition ainsi obtenue selon

$$S = K \sum p_i \log_a p_i \qquad \text{avec } a = 2 \text{ ou } a = e \qquad (1)$$

K pouvant prendre la valeur -1 ou +1 et $p_i$ étant la périodicité normalisée de l'intervalle de fréquence qui apparaît dans l'i-ème intervalle d'amplitude, et **en ce que** la normalisation de la périodicité est effectuée avec le nombre total de tous les intervalles de fréquence présents dans le spectre de puissance correspondant, de sorte que l'équation suivante soit vérifiée:

$$\sum_i p_i = 1 \qquad (2)$$

**8.** Procédé selon la revendication 5 ou 6, **caractérisé en ce que** l'amplitude des spectres de puissance normalisés est quantifiée à des intervalles d'amplitude de même taille et la fréquence des spectres de puissance est divisée en intervalles de fréquence de même taille, **en ce que** la périodicité des intervalles d'amplitude faisant partie des intervalles de fréquence individuels est déterminée, normalisée et à chaque fois associée aux numéros d'ordre des intervalles de fréquence et **en ce que** l'entropie S est calculée à partir de la fonction de répartition ainsi obtenue selon

$$S = K \sum_j p_j \cdot \log_a p_j \qquad \text{avec } a = 2 \text{ ou } a = e \qquad (3)$$

K pouvant prendre la valeur -1 ou +1 et $p_j$ étant la périodicité normalisée de l'intervalle d'amplitude qui apparaît dans le j-ème intervalle de fréquence, et **en ce que** la normalisation de la périodicité est effectuée avec le nombre total de tous les intervalles de fréquence présents dans le spectre de puissance correspondant, de sorte que l'équation suivante soit vérifiée :

$$\sum_j p_j = 1 \qquad (4)$$

**9.** Procédé selon la revendication 7 ou 8, **caractérisé en ce que** l'intervalle de fréquence utilisé est l'intervalle de fréquence ressortant de l'analyse de Fourier.

10. Procédé selon l'une des revendications 1 à 4, **caractérisé en ce qu'**une décomposition en ondelettes des portions de temps des signaux de réception est réalisée pour la transformation linéaire et l'entropie S est calculée à partir des coefficients d'ondelette selon

$$S = K \sum_{i=1}^{l} \sum_{k=1}^{N_i} p_{i,k} \log_a p_{i,k} \qquad \text{avec } a = 2 \text{ ou } a = e \qquad (5)$$

K pouvant prendre la valeur -1 ou +1 et $p_{i,k}$ étant la probabilité des coefficients de détail $d_{i,k}$, 1 le nombre d'échelles et $N_i$ le nombre de coefficients de détail sur l'i-ème échelle, et **en ce que** la probabilité $p_{i,k}$ est calculée conformément à

$$p_{i,k} = 1 + \frac{1}{\sqrt{2\pi}\sigma_i} e^{-\frac{d^2_{i,k}}{2\sigma_i^2}} \qquad (6)$$

$\sigma_i$ étant l'écart type du bruit sur l'i-ème échelle.

11. Procédé selon la revendication 10, **caractérisé en ce que** la décomposition en ondelettes est effectuée en plusieurs niveaux ou étapes de transformation, des coefficients d'approximation et des coefficients de détail étant obtenus à chaque décomposition en ondelettes, **en ce que** la décomposition en ondelettes est appliquée, dans le premier niveau, au signal de temps défini par les portions de temps individuelles et, dans chaque niveau suivant, à un signal de temps modifié généré à partir des coefficients d'approximation et **en ce que** les coefficients de détail $d_{i,k}$ respectivement obtenus lors d'un niveau d'une décomposition en ondelettes sont appliqués en fonction de leur numéro de coefficient k à l'une des i échelles successives, laquelle correspond au niveau respectif de la décomposition en ondelettes.

12. Procédé selon l'une des revendications 1 à 11, **caractérisé en ce que** l'entropie S calculée est comparée à une valeur de seuil et la présence d'au moins une cible est déduite en cas de franchissement vers le bas ou vers le haut, suivant la valeur K prédéfinie à -1 ou +1, de la valeur de seuil.

Fig. 1

Fig. 2

Fig. 3

Fig. 4

Fig. 5

Fig. 6

$S_{min}$

Fig. 8

a)

b)

c)

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5668778 A
- US 5181254 A
- JP 2003232820 A
- US 4060792 A